# EUROPEAN PATENT SPECIFICATION

(11) **EP 1 396 618 B1**
(45) Date of publication and mention of the grant of the patent: **14.12.2005**
(21) Application number: 03076147.2
(22) Date of filing: 17.04.2003
(51) Int. Cl.: F01N 3/22, F01N 3/30

(54) **Secondary-air system for internal combustion engines**
Sekundärluftsystem für Brennkraftmaschine
Sytème d'air secondaire pour moteur à combustion interne

(30) Priority: 05.09.2002 IT MI20021889
(43) Date of publication of application: 10.03.2004
(73) Proprietor: PIAGGIO & C. S.p.A., 56025 Pontedera (Pisa) (IT)
(72) Inventor: Nesti, Paolo, 56010 Ghezzano (Pisa) (IT)
(74) Representative: De Gregori, Antonella

(56) References cited:
- EP-A- 1 184 546
- DE-A- 2 337 051
- US-A- 4 604 865
- US-A- 5 301 504

## Description

The present invention relates to a secondary-air system for internal-combustion engines.

Secondary-air systems for two-stroke or four-stroke internal-combustion engines have been known for some time for providing intake of fresh air, referred to as secondary air, into the exhaust pipe in a position upstream of a silencer with catalytic converter.

Via an enrichment of oxygen in the exhaust gases that must come into contact with the catalytic converter, it is in fact possible to obtain a greater conversion of the pollutant chemical species, such as carbon monoxide and unburnt hydrocarbons, thus reducing emissions of harmful gases into the environment.

To manage the said controlled inflow of air, various secondary-air systems with automatic operation have been proposed.

EP-A-1184546 relates to an electric operated control valve (30) for controlling fluid communication between an air pump (28) and a gas treatment system (22) that treats exhaust gas produced by an internal combustion engine (20). The valve (30) has a mechanism, controlled by a solenoid and by the difference between fluid pressure at its inlet (34), and fluid pressure at its outlet (36).

One of the known systems comprises a valve of a leaf type designed to enable intake of fresh air from the surrounding environment through a filter box, to send it on to the exhaust pipe for unburnt gases set upstream of the catalytic converter.

The valve for the secondary-air system regulates said flow and prevents any possible reflux of unburnt pollutant gases from the exhaust pipe through the filter box to the environment.

The above-mentioned types of valve have generally consisted of a small elastic rectangular plate, referred to as "leaf", which, by resting upon a rectangular opening of a partition wall, closes it on all four sides, being fixed along one side of the rectangle.

A valve thus built opens when the difference in pressure between the area upstream and the area downstream of the partition wall is greater than a threshold value, which permits the resistant elastic force of the leaf to be overcome.

When the said pressure difference drops below said threshold value, or when the pressure differential is reversed, the leaf tends to close.

The leaf valve functions therefore as a non-return valve, enabling flow in one direction only, i.e., from the filter box to the exhaust pipe.

The cyclic functioning of the engine generates, in the exhaust pipe, waves of negative pressure, which, by propagating along the secondary-air pipe, arrive downstream of the valve of the secondary-air system, causing opening of the leaf and delivery of secondary air to the exhaust pipe.

Valves for secondary-air systems according to the prior art generally comprise a rectangular leaf made of stainless steel or carbon fibre.

The characteristics of the materials used, such as stiffness and weight, condition the behaviour of the valve and, in particular, the amount of opening of the valve, the delay in opening due to inertia, and, finally, the minimum threshold value of difference in pressure between the pipe upstream and the pipe downstream, in the vicinity of the valve, required for overcoming the resistant elastic force of the leaf and for opening the valve.

The aforementioned factors of the valve leaves according to the prior art concur in limiting the mean flow rate of secondary air, so reducing the efficiency of the system.

The main purpose of the present invention is to provide a secondary-air system which will not present the aforesaid drawbacks of the prior art.

Another purpose of the present invention is to provide a secondary-air system which presents losses due to lamination that are smaller than those of valves according to the prior art.

A further purpose of the present invention is to provide a secondary-air system with improved tightness and increased resistance to back-pressures.

Also amongst the purposes of the present invention is that of providing a secondary-air system which is inexpensive to make and simple to assemble.

The above and other purposes according to the present invention are achieved thanks to the secondary-air system for internal-combustion engines according to Claim 1.

Further characteristics of the invention form the subject of the dependent claims.

The characteristics and advantages of a secondary-air system for internal-combustion engines according to the present invention will emerge more clearly from the following description, which is provided purely by way of non-limiting example, with reference to the annexed schematic drawings, in which:

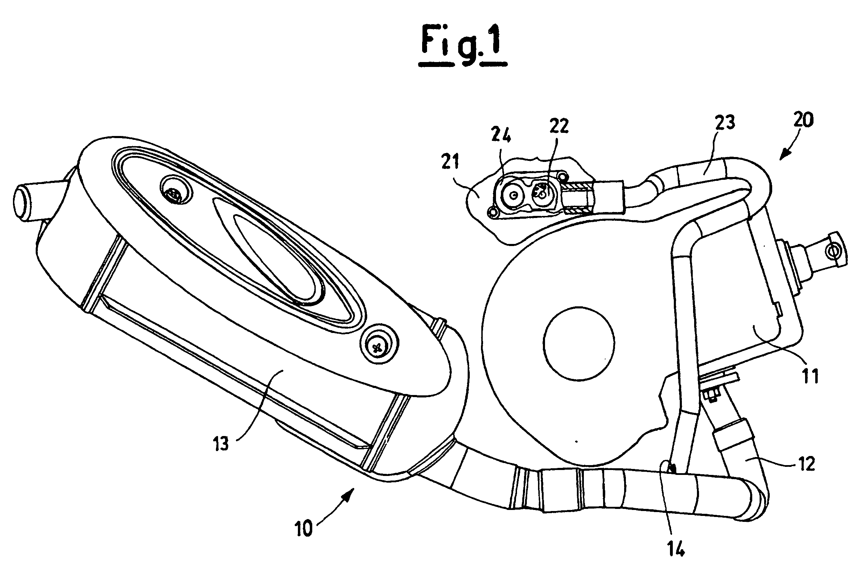

- Figure 1 is a partially cutaway side view of an engine with exhaust system provided with a secondary-air system built according to the present invention;
- Figure 2 is a front view of a valve for a secondary-air system according to the invention;
- Figure 3 is a cross-sectional view of the valve, taken according to the line III-III of Figure 2; and
- Figure 4 is a cross-sectional view, similar to the one of Figure 3, of a valve for a secondary-air system according to a different embodiment of the invention.

With reference to the figures, an internal-combustion engine 10 of the two-stroke or four-stroke type is equipped with an engine body 11, to which there is connected an exhaust pipe 12, which conveys the burnt gases to a silencer equipped with a catalytic converter 13.

The internal-combustion engine 10 is provided with a secondary-air system 20 comprising a filter box 21, which contains an air filter (not illustrated), a valve 22, and a pipe 23 for supplying secondary air, which faces the exhaust pipe 12 via a pipe connector 14 set in a position upstream of the silencer equipped with catalytic converter 13.

The filter box 21 of the secondary-air system 20 carries, fixed on the inside, a partition wall 24 designed to divide the filter box 21 into a first area 21', connected to the external environment and a second area 21", set towards the pipe 23 for supply of secondary air to the exhaust pipe 12.

In the aforesaid partition wall 24, there is made a plurality of openings 25, which are preferably circular and are arranged preferably along a circumference around a fixing hole 26.

The above openings 25 set the outside environment in communication with the area of the filter box 21 set in the direction of the pipe 23.

A circular elastic membrane 27 is fixed on the partition wall 24 by means of a retention plug 28 in a position corresponding to the fixing hole 26.

For fixing, there is provided, in the membrane 27, in a central position, a through hole 30, through which the retention plug 28 is inserted.

The membrane 27 is made of a size such as to cover all the openings 25.

The material of which the membrane 27 is made is of a plastic type, for example, a film of polyethylene terephthalate (PET).

Thanks to the characteristics of high elasticity and strength of said material, the membrane 27 may be relatively thin so that the pressure necessary to bend it and enable the openings 25 to be uncovered is considerably lower than the pressure necessary to open leaves of a traditional type.

This means that, to bring about opening of a valve for a secondary-air system according to the invention thus made, relatively limited pressure differentials between the area upstream and the area downstream of the valve are sufficient.

During running of the engine, it is therefore possible to obtain opening of the valve of the secondary-air system also during periods in which said pressure differentials would not be sufficient to open a leaf valve of a traditional type.

There is, moreover, an advantageous reduction in losses due to lamination.

The circular shape of the membrane 27 and the arrangement of the openings 25 around the fixing hole 26 are appropriately chosen to obtain an adequate section for total passage of the gases in compliance with the strength of the material of the membrane 27.

It is, in fact, preferable to divide the section of total passage of the gases into a number of openings 25 of relatively small size, on which the membrane 27 rests during the periods of closing so as to improve the seal and resistance to possible back-pressures exerted on the valve.

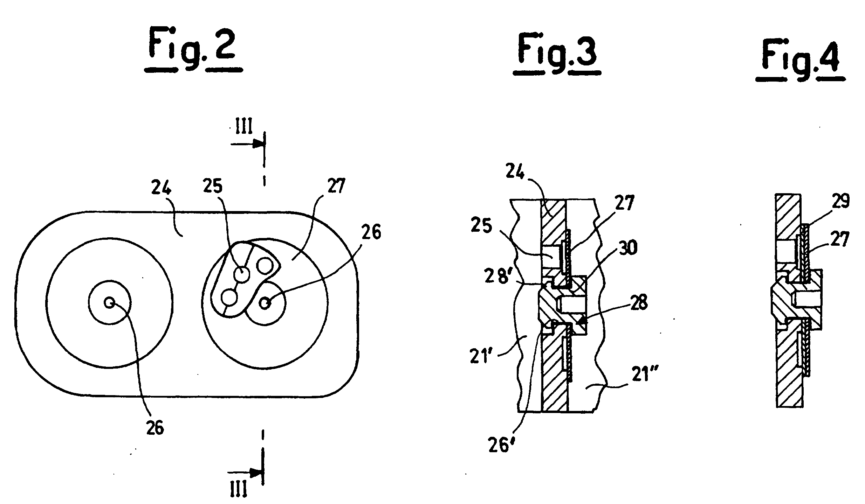

Advantageously, as illustrated in Figure 2, the compact arrangement of the assembly consisting of the openings 25 and the membrane 27 enables integration of more than one of such assemblies on the partition wall 24 of a valve 20 for a secondary-air system so as to increase the effective section of passage of the valve.

According to a different embodiment of the invention, illustrated in Figure 4, a contrast diaphragm 29 is provided, preferably made of rubber, also this being of a circular shape and being set between the partition wall 24 and the membrane 27 in order to improve tightness and resistance to possible back-pressures acting on the valve.

The material of which the retention plug 28 is made is rubber, which, thanks to its elastic deformability, enables assembly of the entire valve by means of insertion of the retention plug 28 through the through hole 30 and the fixing hole 26.

In this connection, the retention plug 28 has a shaped head 28' designed to engage within a corresponding shaping 26' of the fixing hole 26.

The choice of the material and of the modes of fixing lead to a facilitated assembly and enable the production of the valve for secondary-air systems 20 at low costs.

The overall effect of the characteristics and advantages referred to above is to obtain a greater mean flow rate of secondary air through the valve for secondary-air systems 20, bestowing, thanks to the increase in the amount of oxygen present in the exhaust gases, a greater efficiency of conversion of the pollutant species, so enabling reduction in harmful emissions from the engine.

## Claims

1. Secondary-air system for internal-combustion engines comprising a filter box (21) designed to house a valve (22) carried on a partition wall (24) fixed on the inside of the filter box (21), to which divides the filter box (21) into a first area (21') connected to the environment and a second area (21") connected to an exhaust pipe (12) of the internal-combustion engine, said valve (22) comprising at least one circular elastic membrane (27) fixed to said partition wall (24) for covering a plurality of openings (25) made in said partition wall (24) and arranged around a circumference to set in communication said first area (21') with said second area (21") of the filter box (21), said system being **characterized in that** there is moreover present a contrast diaphragm (29) set between the partition wall (24) and the membrane (27).

2. Secondary-air system according Claim 1, in which said contrast diaphragm (29) has a circular shape and is made of rubber.

3. Secondary-air system according to Claim 1, in which said membrane (27) is made of plastic.

4. Secondary-air system according to claim 3, in which said membrane (27) is made of polyethylene terephthalate (PET).

5. Secondary-air system according to Claim 1, in which said partition wall (24) has at least two sets of openings (25) and one membrane (27) for each set of openings, with a diameter of the latter that is such as to cover all the openings (25) of each set.

6. Secondary-air system according to Claim 1, in which said filter box (21) has the second area (21") connected to the exhaust pipe (12) of the internal-combustion engine via a pipe (23) connected to said exhaust pipe (12).

7. Secondary-air system according to Claim 1, in which there is provided a fixing hole (26) made within the partition wall (24) in a central position with respect to the arrangement of the openings (25) for fixing said membrane by means of a retention plug (28).

8. Secondary-air system according to Claim 7, in which said membrane (27) has, at its centre, a through hole (30) through which said retention plug (28) is inserted.

9. Secondary-air system according to Claim 8, in which said retention plug (28) is made of rubber and is provided with a head (28') appropriately shaped so as to be slotted into the fixing hole (26) shaped accordingly.

## Patentansprüche

1. Sekundärluftsystem für Verbrennungsmotoren mit einem Filterkasten (21), der derart konstruiert ist, dass er ein Ventil (22) beherbergt, das an einer Trennwand (24) gehalten ist, die an der Innenseite des Filterkastens (21) befestigt ist, um den Filterkasten (21) in einen ersten Bereich (21'), der mit der Umgebung verbunden ist, und einen zweiten Bereich (21"), der mit einem Auspuffrohr (12) des Verbrennungsmotors verbunden ist, zu unterteilen, wobei das Ventil (22) mindestens eine kreisförmige elastische Membran (27) umfasst, die an der Trennwand (24) befestigt ist, um eine Vielzahl von Öffnungen (25) abzudecken, die in der Trennwand (24) hergestellt und um einen Umfang herum angeordnet sind, um den ersten Bereich (21') mit dem zweiten Bereich (21") des Filterkastens (21) in Verbindung zu setzen, wobei das System **dadurch gekennzeichnet ist, dass** darüber hinaus eine Gegendruckscheibe (29) vorhanden ist, die zwischen die Trennwand (24) und die Membran (27) gesetzt ist.

2. Sekundärluftsystem nach Anspruch 1, bei dem die Gegendruckscheibe (29) eine Kreisform aufweist und aus Gummi hergestellt ist.

3. Sekundärluftsystem nach Anspruch 1, bei dem die Membran (27) aus Kunststoff hergestellt ist.

4. Sekundärluftsystem nach Anspruch 3, bei dem die Membran (27) aus Polyethylenterephthalat (PET) hergestellt ist.

5. Sekundärluftsystem nach Anspruch 1, bei dem die Trennwand (24) mindestens zwei Sätze Öffnungen (25) und eine Membran (27) für jeden Satz Öffnungen aufweist, wobei ein Durchmesser der letzteren derart ist, dass die gesamten Öffnungen (25) jedes Satzes bedeckt sind.

6. Sekundärluftsystem nach Anspruch 1, bei dem der zweite Bereich (2 1 ") des Filterkastens (21) mit dem Auspuffrohr (12) des Verbrennungsmotors über ein mit dem Auspuffrohr (12) verbundenes Rohr (23) verbunden ist.

7. Sekundärluftsystem nach Anspruch 1, bei dem ein Befestigungsloch (26) vorgesehen ist, das in der Trennwand (24) in einer zentralen Position in Bezug auf die Anordnung der Öffnungen (25) hergestellt ist, um die Membran mittels eines Rückhaltestöpsels (28) zu befestigen.

8. Sekundärluftsystem nach Anspruch 7, bei dem die Membran (27) in ihrer Mitte ein Durchgangsloch (30) aufweist, durch das der Rückhaltestöpsel (28) eingesetzt ist.

9. Sekundärluftsystem nach Anspruch 8, bei dem der Rückhaltestöpsel (28) aus Gummi hergestellt ist und mit einem Kopf (28') versehen ist, der geeignet geformt ist, so dass er in das entsprechend geformte Befestigungsloch (26) hineingedrückt werden kann.

## Revendications

1. Système d'air secondaire pour des moteurs à combustion interne comprenant un boîtier de filtre (21) conçu pour accueillir une soupape (22) supportée sur une paroi de séparation (24) fixée à l'intérieur du boîtier de filtre (21), pour diviser le boîtier de filtre (21) en une première zone (21') reliée à l'environnement et une seconde zone (21") reliée à un tuyau d'échappement (12) du moteur à combustion interne, ladite soupape (22) comprenant au moins une membrane élastique circulaire (27) fixée sur ladite paroi de séparation (24) pour recouvrir une pluralité d'ouvertures (25) pratiquées dans ladite paroi de séparation (24) et agencées autour d'une circonférence afin de faire communiquer ladite première zone (21') avec ladite seconde zone (21") du boîtier de filtre (21), ledit système étant **caractérisé en ce qu'**un diaphragme de contraste (29) est en outre disposé entre la paroi de séparation (24) et la membrane (27).

2. Système d'air secondaire selon la revendication 1, dans lequel ledit diaphragme de contraste (29) a une forme circulaire et est en caoutchouc.

3. Système d'air secondaire selon la revendication 1, dans lequel ladite membrane (27) est en plastique.

4. Système d'air secondaire selon la revendication 3, dans lequel ladite membrane (27) est en polyéthylène téréphtalate (PET).

5. Système d'air secondaire selon la revendication 1, dans lequel ladite paroi de séparation (24) comporte au moins deux ensembles d'ouvertures (25) et une membrane (27) pour chaque ensemble d'ouvertures, le diamètre de cette dernière étant tel qu'elle recouvre toutes les ouvertures (25) de chaque ensemble.

6. Système d'air secondaire selon la revendication 1, dans lequel ledit boîtier de filtre (21) comporte une seconde zone (21") reliée au tuyau d'échappement (12) du moteur à combustion interne via un tuyau (23) relié audit tuyau d'échappement (12).

7. Système d'air secondaire selon la revendication 1, dans lequel un trou de fixation (26) est pratiqué dans la paroi de séparation (24) dans une position centrale par rapport à l'agencement des ouvertures (25) afin de fixer ladite membrane à l'aide d'un bouchon de retenue (28).

8. Système d'air secondaire selon la revendication 7, dans lequel ladite membrane (27) comporte, en son centre, un trou traversant (30) à travers lequel est inséré ledit bouchon de retenue (28).

9. Système d'air secondaire selon la revendication 8, dans lequel ledit bouchon de retenue (28) est en caoutchouc et est muni d'une tête (28') dont la forme lui permet d'être insérée par une fente dans le trou de fixation (26) de forme correspondante.
